# EUROPEAN PATENT SPECIFICATION

(11) **EP 4 300 687 B1**
(45) Date of publication and mention of the grant of the patent: **29.04.2026**
(21) Application number: 22780801.1
(22) Date of filing: 28.03.2022
(51) Int. Cl.: H01M 50/262, B60K 1/04, H01M 50/209, H01M 50/249, H01M 50/264, H01M 50/224

(54) **BATTERY MODULE, VEHICULAR BATTERY PACK, AND ELECTRIC VEHICLE**
BATTERIEMODUL, FAHRZEUGBATTERIEPACK UND ELEKTROFAHRZEUG
MODULE DE BATTERIE, BLOC-BATTERIE DE VÉHICULE ET VÉHICULE ÉLECTRIQUE

(30) Priority: 29.03.2021 JP 2021055308
(43) Date of publication of application: 03.01.2024
(73) Proprietor: Daimler Truck AG, 70771 Leinfelden-Echterdingen (DE)
(72) Inventor: OBERHOFFER, Simon, Kawasaki-shi, Kanagawa 211-8522 (JP); WU, ZiQiang, Ningde, Fujian 352100 (CN); LIN, QinZhong, Ningde, Fujian 352100 (CN); LI, XiaoJi, Ningde, Fujian 352100 (CN)
(74) Representative: Hofstetter, Schurack & Partner
(86) International application number: PCT/JP2022/015144
(87) International publication number: WO 2022/210590

(56) References cited:
- WO-A1-2020/026961
- CN-U- 210 200 839
- JP-A- 2013 222 554
- JP-A- 2017 197 047
- JP-A- 2018 156 825
- JP-A- 2019 117 732
- US-A1- 2019 363 321
- US-A1- 2020 212 390
- US-A1- 2020 411 822

## Description

### [Technical Field]

The present disclosure relates to a battery module including a cell stack in which multiple battery cells are stacked, a vehicular battery pack in which the battery module is accommodated in a housing, and an electric vehicle including the vehicular battery pack.

### [Background Art]

Conventionally, from the viewpoint of reducing environmental loads, electric vehicles (EVs and HEVs) that travel by electric motors have been developed in the field of not only passenger cars but also commercial vehicles such as trucks (see Patent Document 1). Generally, a battery pack mounted on such an electric vehicle to drive the vehicle includes at least one battery module including a cell stack in which a plurality of battery cells is stacked along a predetermined stacking direction.

### [Citation List]

### [Patent Literature]

CN 210 200 839 U relates to power battery packs, and provides an end plate, a battery module and a battery pack. The end plate provided by the utility model is used for being arranged between battery cell groups, the end plate comprises a plate body, a plurality of clamping grooves for clamping ribbons are respectively arranged on two side surfaces of the plate body, each clamping groove extends along the length direction of the plate body, and the clamping grooves positioned on the two side surfaces are arranged in a staggered manner along the height direction of the plate body. According to the end plate disclosed by the utility model, the clamping grooves capable of accommodating the ribbons are formed in the two side surfaces of the end plate in the height direction in a staggered manner; when a plurality of battery cell groups are stacked; the battery cell groups on the two sides of the end plate can be strapped in a staggered manner by utilizing the ribbons; therefore, under the condition that the stacking length of the battery cell group is relatively long, the binding effect is better and firmer, the battery cells positioned at the end plates are prevented from sinking, the stability of the battery cell group in the transportation and transfer process is further ensured, the good flatness of the bottom of the module is ensured, and meanwhile, the flatness of a post terminal after the battery cells are stacked is correspondingly good.

WO 2020/026961 A1 relates to a battery stack formed by stacking a plurality of rectangular battery cells; and a binding material formed by binding the battery stack in the stacking direction of the battery cells and fixing each of the battery cells in a pressurized state.

US 2020/212390 A1 discloses a battery module including battery stacks, a first restraining part, and a plurality of second restraining parts. The first restraining part has: a flat plate part; a plurality of first wall parts that protrude from a main surface of the flat plate part, extend in a stacking direction of the batteries, and are arranged in a first direction; and second wall parts extending in the first direction at end parts of each wall part. The second restraining parts are disposed individually corresponding to the first wall parts and each have: a belt part extending parallel to the flat plate part; a third wall part protruding from the belt part toward the first wall part and extending in the stacking direction; and fourth wall parts extending in the first direction at end parts of the third wall part. There are arranged a plurality of housing spaces for the battery stacks.

### [Summary of Invention]

### [Technical Problem]

In order to increase the output of the battery module, the number of the battery cells stacked in the cell stack (hereinafter, also referred to as "number of cells") is sometimes increased. However, there is a problem that, as the number of cells increases, the dimension of the cell stack in the stacking direction becomes longer, so that a bending deformation with respect to the stacking direction can more easily occur in the cell stack. In addition, since individual differences exist in the battery cells, there is a problem that, as the number of cells increases, the cell stack is more likely to be distorted by the accumulation of the individual differences. Therefore, in the battery module, an increase in stiffness is demanded to suppress the deformation of the cell stack.

On the other hand, if a stiffener(s) is added to increase the stiffness of the battery module, the increase in volume and weight by the addition of the stiffener may cause a decrease in energy density (i.e., energy amount per unit volume or per unit weight).

The present disclosure has been devised in view of the above-mentioned problems, and one of the objects of the present disclosure is to suppress a decrease in energy density while increasing stiffness of a battery module.

### [Solution to Problem]

The present disclosure has been made to solve at least a part of the above problems, and can be realized as the following aspects or application examples.
(1) A battery module according to the present application example includes: a cell stack in which a plurality of battery cells is stacked along a predetermined stacking direction; a pair of end plates disposed on both end faces of the cell stack in the stacking direction; and a mid-plate disposed in an intermediate portion of the cell stack in the stacking direction, the mid-plate having a pair of main faces each facing the battery cell and a plurality of side faces each connecting outer edges of the pair of main faces, wherein the mid-plate has a recess on at least one of the side faces, the recess extending in a cross direction that intersects the stacking direction, wherein the mid-plate having a pair of legs which are formed between each main face and the recess.

According to such a battery module, both end faces of the cell stack in the stacking direction can be supported by the end plates, and in addition, the intermediate portion of the cell stack in the stacking direction can be supported by the mid-plate. Thus, the stiffness of the battery module can be increased. Especially, since the mid-plate can increase the stiffness at the intermediate portion in the stacking direction where the bending deformation is likely to occur in the cell stack, the deformation of the cell stack can be effectively suppressed.

Further, since the recess is provided on at least one of the side faces of the mid-plate, the recess can be used as a space for accommodating another member. For example, by disposing a part of a belt (a first belt to be described later) that holds the battery cells stacked between the end plate and the mid-plate from both sides in the stacking direction in the recess, the battery cells stacked between the end plate and the mid-plate can be held by the belt from both sides in the stacking direction. In this case, the stiffness of the battery module can be further increased.

Furthermore, utilization of the recess of the mid-plate as the receiving space for another member can obviate the need for providing a different space for arranging another member, realizing space saving. Thus, it is possible to increase the output while avoiding an increase in size and/or weight of the battery module, and therefore, a decrease in energy density can be suppressed. It should be noted that the member to be accommodated in the recess of the mid-plate can be exemplified by a stiffener (first stiffener plate to be described later) for reinforcing a housing that accommodates the battery module.

(2) The battery module according to the present application example may include a first belt being formed in an endless belt shape and having an outer belt portion disposed outside of the end plate in the stacking direction and an inner belt portion disposed in the recess, and the first belt may hold the battery cells stacked between the end plate and the mid-plate from both sides in the stacking direction.

As described above, according to the first belt that holds a part of the battery cells rather than the entire battery cells stacked in the cell stack, the individual battery cells can be effectively restrained as compared with a belt (second belt to be described later) that holds the entire cell stack. Further, holding the battery cells from both sides in the stacking direction can suppress vibrations and can easily absorb deformation due to thermal expansion of the individual battery cells. Thus, the stiffness of the battery module can be further increased.

In addition, the disposition of the inner belt portion of the first belt in the recess of the mid-plate can obviate the need for providing a different space for arranging the inner belt portion of the first belt, realizing space saving. Therefore, a decrease in the energy density can be further suppressed.

(3) The battery module according to the present application example may include: a pair of the first belts provided on both sides of the mid-plate in the stacking direction; and a second belt being formed in an endless belt shape and having a pair of second outer belt portions respectively disposed on outside of the pair of end plates in the stacking direction, and the second belt may hold the cell stack from both sides in the stacking direction.

If the pair of first belts is provided as described above, the cell stack can be restrained at both sides of the mid-plate in the stacking direction by the pair of first belts, respectively. In addition to this, if the second belt is provided, the entire cell stack can be restrained by the single second belt. Therefore, while effectively restraining the individual battery cells by each of the first belts, it is possible to suppress the relative positional deviation between both sides in the cell stack in the stacking direction by the second belt. Thus, the stiffness of the battery module can be further increased.

(4) In the battery module according to the present application example, the mid-plate may be an aluminum extruded product and may have a hollow extending in the cross direction.

In this case, the mid-plate can be easily produced by extrusion with the cross direction set as the extrusion direction. Therefore, manufacturing of the mid-plate can be facilitated, and also, the weight of the mid-plate can be reduced by the hollow.

(5) A vehicular battery pack according to the present application example includes: a battery module according to any one of the above (1) to (4); a housing accommodating the battery module and having a bottom plate on which the battery module is mounted and a surrounding frame standing from outer edges of the bottom plate to surround the battery module; and a first stiffener plate fixed to at least one of the bottom plate and the surrounding frame and accommodated in the recess of the mid-plate.

The arrangement of the first stiffener plate can increase the stiffness of the housing. This enables the bottom plate to be thinner and also can avoid the enlargement of the other stiffeners (e.g., a second stiffener plate to be described later), and thus, can inhibit increases in size and weight of the vehicular battery pack.

Further, the accommodation of the first stiffener plate in the recess of the mid-plate can obviate the need for providing a different space for arranging the first stiffener plate in the housing, realizing space saving. Therefore, while increasing the stiffness of the housing, it is possible to suppress a decrease in the energy density since the output can be increased while avoiding increases in size and weight of the vehicular battery pack.

(6) The vehicular battery pack according to the present application example may include a fastening structure that fastens the mid-plate and the first stiffener plate to each other.

If such a fastening structure is provided, the displacement of the mid-plate relative to the first stiffener plate can be prevented. Therefore, the position of the battery module in the housing can be stabilized, and because the position of the mid-plate is stabilized, the deformation of the battery module itself can be further suppressed. Thus, the reliability of the vehicular battery pack can be enhanced.

Further, if the mid-plate is fastened to the first stiffener plate, the mid-plate is no longer necessary to be fixed to the bottom plate, so that the bottom plate can omit a fastening margin, which realizes a reduction in the thickness of the bottom plate.

(7) The vehicular battery pack according to the present application example may include: a plurality of the battery modules arranged in parallel in postures in which the stacking directions extend parallel to each other; and a second stiffener plate disposed on the bottom plate and extending along the stacking direction between the battery modules adjacent to each other, wherein the first stiffener plate extends along the cross direction and is disposed on the bottom plate to intersect the second stiffener plate.

If the second stiffener plate is disposed by utilizing the dead space between the battery modules as described above, while further increasing the stiffness of the housing, it is possible to suppress a decrease in the energy density since the output can be increased concurrently with avoiding an increase in size of the battery pack. In addition, according to the second stiffener plate fixed between the adjacent battery modules, it is possible to suppress the positional deviation between the adjacent battery modules. Thus, the reliability of the vehicular battery pack can be increased.

(8) An electric vehicle according to the present application example includes the vehicular battery pack according to any one of the above (5) to (7).

According to such an electric vehicle, since the stiffness of the housing is increased and a decrease in the energy density is suppressed in the vehicular battery pack as described above, the protectability of the vehicular battery pack can be secured even in a collision, and a satisfactory cruising distance can be realized.

### [Advantageous Effects of Invention]

According to the present disclosure, it is possible to suppress a decrease in energy density while increasing stiffness of the battery module.

### [Brief Description of Drawings]

FIG. 1 is a schematic top view of an electric vehicle.
FIG. 2 is a perspective view of a battery module.
FIG. 3 is an exploded perspective view of the battery module.
FIG. 4 is a perspective view of a mid-plate.
FIG. 5 is an exploded perspective view of a battery pack.
FIG. 6 is a cross-sectional view illustrating a fastening structure.

### [Description of Embodiments]

Embodiments of the present disclosure will now be described with reference to drawings. The following embodiments are merely illustrative and are not intended to preclude the application of various modifications and techniques not explicitly set forth in the embodiments. Each configuration of the following embodiments can be implemented by various modifications without departing from the gist thereof. Also, it can be selected as necessary, or can be combined as appropriate.

### [1. Configuration]

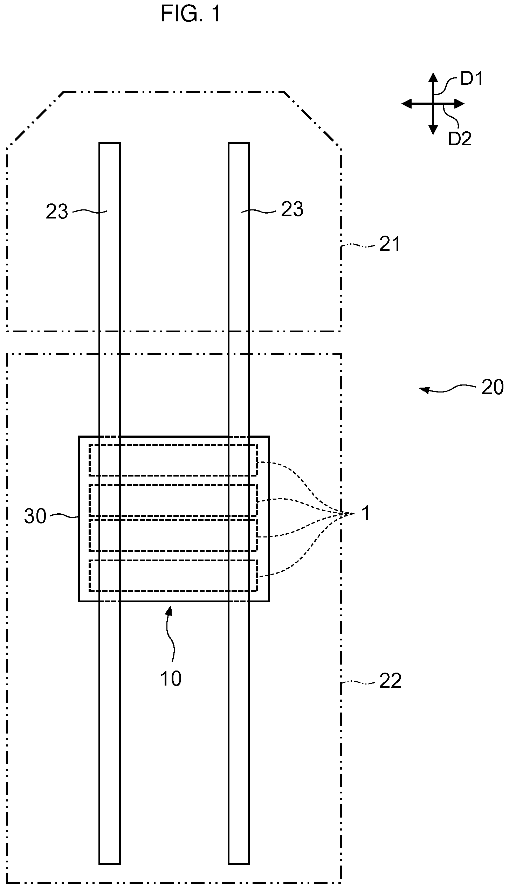

As illustrated in FIG. 1, an electric vehicle 20 according to the present embodiment is an electric vehicle or a hybrid vehicle that includes a battery pack (vehicular battery pack) 10 for driving, and that travels by driving an electric motor (not illustrated) with electric power stored in the battery pack 10. Here, the electric vehicle 20 is illustrated as a truck having a cab 21 and a cargo box 22. FIG. 1 illustrates the cab 21 and the cargo box 22 by two-dot chain lines.

The battery pack 10 of the present embodiment is a substantially rectangular parallelepiped in external appearance, and has a substantially rectangular shape in a top view. The battery pack 10 is disposed below a pair of side rails 23 extending in a vehicle length direction D1, and is supported by each of the side rails 23. However, the shape, the arrangement, and the supporting manner of the battery pack 10 should not be limited to those exemplified here. Although the electric vehicle 20 equipped with one battery pack 10 is illustrated here, the number of the battery packs 10 to be mounted on the electric vehicle 20 may be two or more.

The battery pack 10 of the present embodiment includes multiple battery modules 1 and a housing 30 that accommodates the battery modules 1. The present embodiment illustrates the battery pack 10 in which the single housing 30 accommodates four battery modules 1 arranged in the vehicle length direction D1.

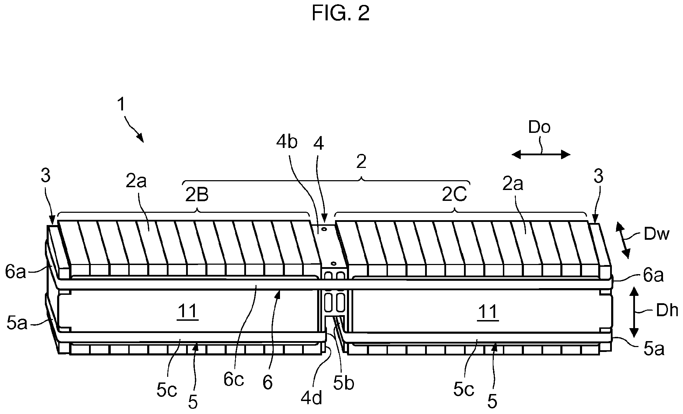

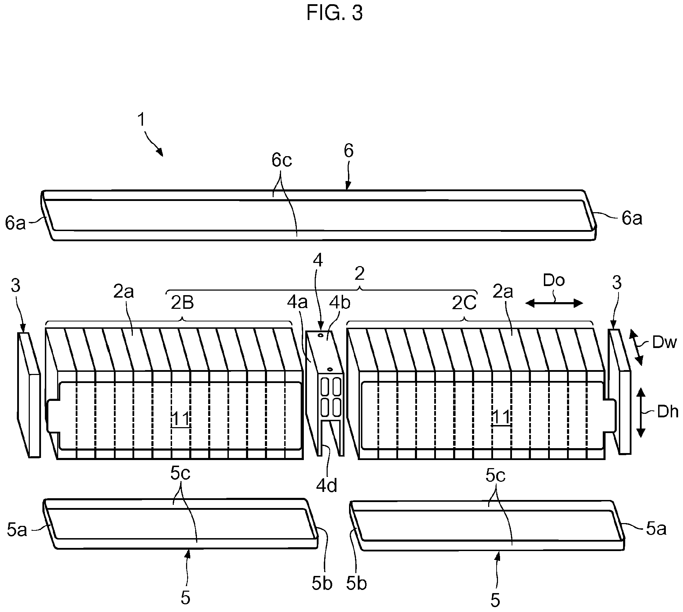

Each of the battery modules 1 is configured to be similar to each other. As illustrated in FIGS. 2 and 3, each of the battery modules 1 includes: a cell stack 2 in which multiple cells 2a are stacked in a predetermined stacking direction Do; a pair of end plates 3 disposed on both end faces of the cell stack 2 in the stacking direction Do; and a mid-plate 4 disposed in the intermediate portion of the cell stack 2 in the stacking direction Do. Each battery module 1 of the present embodiment further includes first belts 5 and a second belt 6 each of which bundles two or more battery cells 2a.

Each battery module 1 of the present embodiment is longer in the stacking direction Do than in each of a width direction Dw perpendicular to the stacking direction Do and a height direction Dh perpendicular to both the stacking direction Do and the width direction Dw, and forms an elongated rectangular parallelepiped shape. However, the shape of each battery module 1 should not be limited to the shape exemplified here.

The multiple battery cells 2a stacked in the cell stack 2 are configured to be identical to each other. Each battery cell 2a of the present embodiment is shorter in the stacking direction Do than in each of the width direction Dw and the height direction Dh, and forms a thin rectangular plate shape. In the cell stack 2, the multiple battery cells 2a are connected in series. Incidentally, on both sides of each cell stack 2 in the width direction Dw, heating foils 11 for warming the individual battery cells 2a are disposed.

The end plates 3 and the mid-plate 4 are reinforcing members for suppressing the deformation (increasing rigidity) of the cell stack 2. Each end plate 3 forms a thin rectangular plate shape similar to the battery cell 2a. The pair of end plates 3 sandwiches the cell stack 2 from both sides in the stacking direction Do. Each end plate 3 of the present embodiment serves as a fastening part to be tightened by the first belt 5 and the second belt 6.

In contrast, the mid-plate 4 forms a shape of a rectangular plate which is slightly thicker than the end plate 3 and a part of which is provided with a recess (a recess 4d to be described later). The mid-plate 4 divides the multiple battery cells 2a of the cell stack 2 into two groups consisting of a first group 2B and a second group 2C, and sandwiches each of the first group 2B and the second group 2C with the end plates 3 from both sides in the stacking direction Do.

The present embodiment illustrates the battery module 1 in which the mid-plate 4 is provided at a position bisecting the cell stack 2 (the respective numbers of the battery cells 2a in the first group 2B and the second group 2C coincide with each other). However, the mid-plate 4 should only be provided at an intermediate portion excluding both end portions of the cell stack 2 in the stacking direction Do, so that the respective numbers of the battery cells 2a in the first group 2B and the second group 2C divided by the mid-plate 4 may differ from each other.

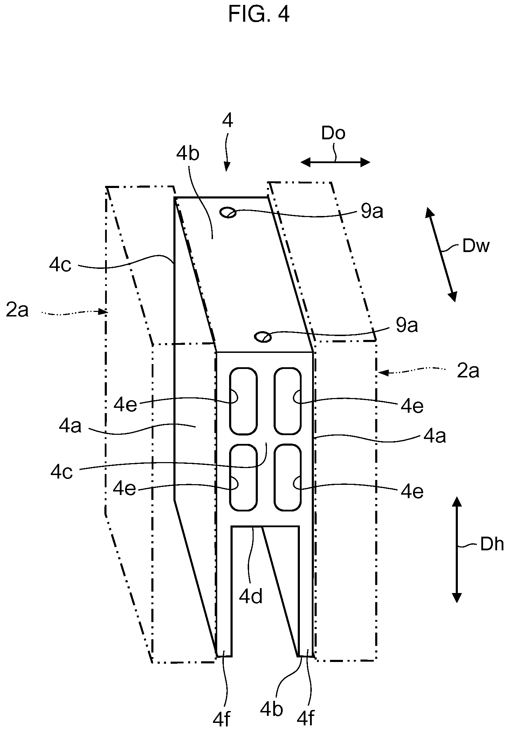

As illustrated in FIG. 4, the mid-plate 4 has a pair of main faces 4a each facing the battery cell 2a, multiple side faces 4b, 4c each connecting outer edges of the main faces 4a, and a recess 4d provided on at least one of the side faces 4b, 4c. The mid-plate 4 of the present embodiment has the main faces 4a each in a rectangular shape, four side faces 4b, 4c respectively connecting four sides corresponding to the outer edges of the main faces 4a to each other, and the recess 4d provided on only one of the side faces 4b, 4c.

Each of the main faces 4a forms a plane extending along the width direction Dw and the height direction Dh. In contrast, the four side faces 4b are divided into two lateral faces 4b extending along the stacking direction Do and the width direction Dw, and two longitudinal faces 4c extending along the stacking direction Do and the height direction Dh.

The recess 4d of the present embodiment extends in the width direction Dw (cross direction that intersects the stacking direction Do) at one (on the lower side in FIG. 4) of the lateral faces 4b. The recess 4d forms a substantially rectangular parallelepiped-shaped space, and opens in a substantially rectangular shape at each longitudinal face 4c.

The recess 4d of the mid-plate 4 functions as a receiving space for disposing another member(s) (for example, the first belts 5 and a first stiffener plate 7 to be described later). Further, a pair of legs 4f, which are formed between each main face 4a and the recess 4d in the mid-plate 4 of the present embodiment, serves as fastening parts to be tightened by the first belts 5.

The mid-plate 4 of the present embodiment is an aluminum extruded product and has hollows 4e extending in the width direction Dw. Here, the exemplified mid-plate 4 is provided with four hollows 4e each of which opens in a substantially rectangular shape at the both longitudinal faces 4c. The mid-plate 4 is manufactured by extrusion of aluminum with the width direction Dw set as the extrusion direction.

As illustrated in FIGS. 2 and 3, the first belts 5 and the second belt 6 are each formed in an endless belt shape by, for example, metal. The respective first belts 5 bundle the first group 2B and the second group 2C divided by the mid-plate 4 into one, whereas the second belt 6 bundles the entire cell stack 2 into one. As such, each of the first belts 5 bundles a smaller number of battery cells 2a as compared to the second belt 6.

The battery module 1 of the present embodiment includes a pair of first belts 5 provided on both sides of the mid-plate 4 in the stacking direction Do. One of the first belts 5 collectively bundles two or more battery cells 2a constituting the first group 2B, and the other one of the first belts 5 collectively bundles two or more battery cells 2a constituting the second group 2C.

Each of the first belts 5 has, specifically, a first outer belt portion 5a disposed outside of the end plate 3 in the stacking direction Do, and an inner belt portion 5b disposed in the recess 4d of the mid-plate 4. Both the first outer belt portion 5a and the inner belt portion 5b of the present embodiment extend in the width direction Dw. The first outer belt portion 5a is disposed in contact with the end plate 3, and the inner belt portion 5b is disposed in contact with the leg portion 4f (see FIG. 4) of the mid-plate 4. It should be noted that, in each of the first belts 5, both of first intermediate portions 5c, which connect the both ends of the first outer belt portion 5a and the inner belt portion 5b to each other, extend in the stacking direction Do, and are disposed outside of the heating foils 11 in the width direction Dw.

Each of the first belts 5 fastens the end plate 3 and the leg portion 4f of the mid-plate 4 by the first outer belt portion 5a and the inner belt portion 5b, respectively. Accordingly, each first belt 5 holds the multiple battery cells 2a (either one of the first group 2B and the second group 2C) stacked between the end plate 3 and the mid-plate 4 from both sides in the stacking direction Do.

The second belt 6 of the present embodiment is disposed at a position different from that of the first belts 5 in the height direction Dh. Here, as compared with the first belts 5, the exemplified second belt 6 is disposed on a side (the upper side in FIGS. 2 and 3) closer to the other lateral face 4b that lacks the recess 4d.

The second belt 6 has a pair of second outer belt portions 6a respectively disposed outside of the pair of end plates 3 in the stacking direction Do. Each of the second outer belt portions 6a of the present embodiment extends in the width direction Dw. The pair of second outer belt portions 6a are disposed in contact with the pair of end plates 3, respectively. It should be noted that, in the second belt 6, both of second intermediate portions 6c, which connect both ends of the pair of second outer belt portions 6a, extend in the stacking direction Do, and are disposed outside of the heating foils 11 in the width direction Dw.

The second belt 6 fastens the pair of end plates 3 by the pair of second outer belt portions 6a, respectively. Accordingly, the second belt 6 holds the cell stack 2 (both the first group 2B and the second group 2C) disposed between the pair of end plates 3 from both sides in the stacking direction Do.

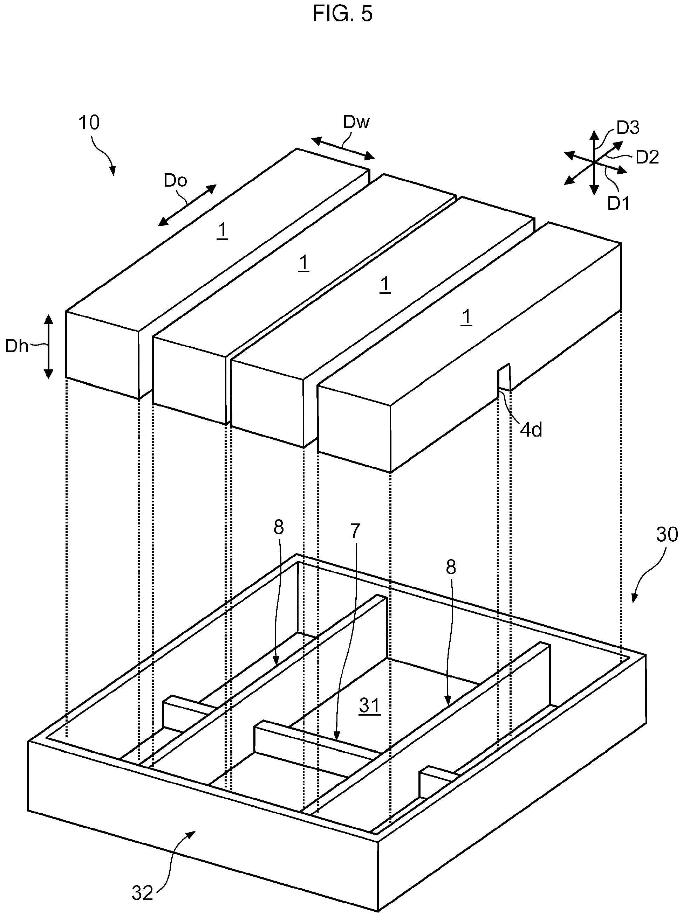

As illustrated in FIG. 5, in the battery pack 10, the multiple battery modules 1 are arranged in parallel in postures in which the stacking directions Do thereof extend parallel to each other. The present embodiment illustrates the battery pack 10 in which each battery module 1 is disposed in a posture in which the stacking direction Do coincides with the vehicle width direction (left-right direction) D2, the height direction Dh coincides with the vehicle height direction (up-down direction) D3, and the recess 4d faces down (to the side of a bottom plate 31 to be described later). Incidentally, in FIG. 5, each of the battery modules 1 is simplified. In the following description, the recess 4d provided in the mid-plate 4 of the battery module 1 is also referred to as "the recess 4d of the battery module 1".

In the battery pack 10 of the present embodiment, the recess 4d of each battery module 1 extends along the vehicle length direction D1. In addition, the four recesses 4d provided in the respective four battery modules 1 are aligned along the vehicle length direction D1.

The housing 30 has the bottom plate 31 on which the battery modules 1 are placed, and a surrounding frame 32 vertically extending from outer edges of the bottom plate 31 to form a tube that surrounds the battery modules 1. Here, as an example, the bottom plate 31 has a rectangular shape and the surrounding frame 32 vertically extends from four sides corresponding to the outer edges of the bottom plate 31 to form a square tube. The bottom plate 31 is formed thinner (has smaller thickness) than any one of the surrounding frame 32, a first stiffener plate 7, and second stiffener plates 8 to be described later. The housing 30 is provided with a lid plate (not illustrated) for closing the space defined by the bottom plate 31 and the surrounding frame 32 from above.

The battery pack 10 of the present embodiment includes the first stiffener plate 7 and the second stiffener plates 8 each in a plate shape for reinforcing the housing 30. The first stiffener plate 7 and the second stiffener plates 8 are arranged on the bottom plate 31 and intersect with each other. Here, as an example, the first stiffener plate 7 extends along the vehicle length direction D1 (i.e. the cross direction), and the two second stiffener plates 8 each extend along the vehicle width direction D2 (i.e. the stacking direction Do).

The first stiffener plate 7 is accommodated in the recess 4d of each battery module 1. In other words, the first stiffener plate 7 extends along the vehicle length direction D1 so as to penetrate through the recesses 4d of the four battery modules 1.

On the other hand, the two second stiffener plates 8 are provided so as to be separated from each other in the vehicle length direction D1, and are disposed between adjacent battery modules 1. That is, each of the second stiffener plates 8 extends along the vehicle width direction D2 between adjacent battery modules 1.

The first stiffener plate 7 and the second stiffener plates 8 are fixed to at least one of the bottom plate 31 and the surrounding frame 32. In the present embodiment, both ends of the first stiffener plate 7 in the vehicle length direction D1 and both ends of each second stiffener plate 8 in the vehicle width direction D2 are fixed to the surrounding frame 32 by welding. In addition, the portions intersecting (overlapping) with each other in the first stiffener plate 7 and the second stiffener plates 8 are fixed to each other by welding.

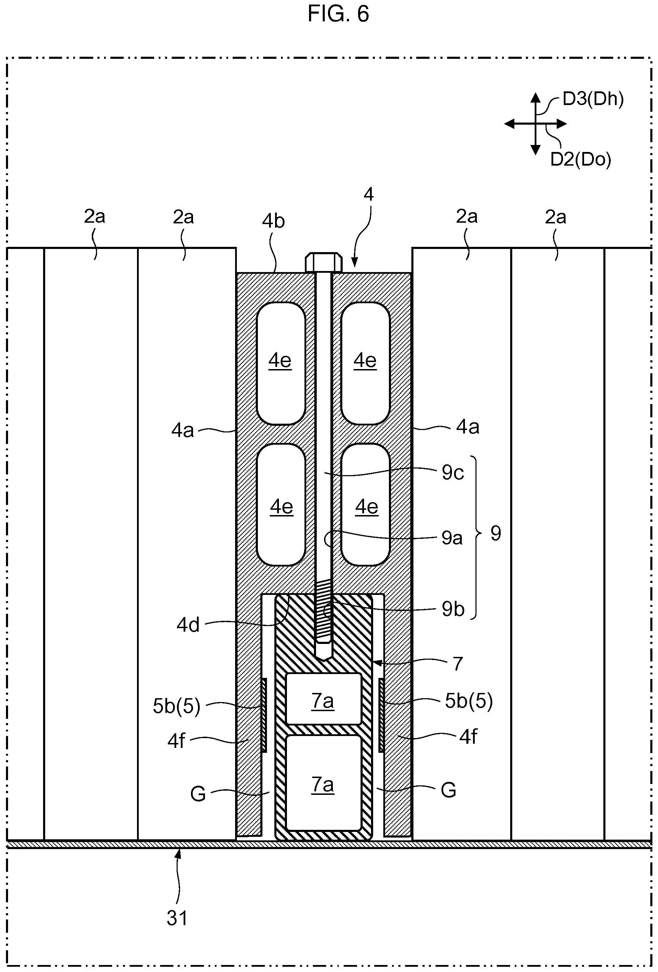

As illustrated in FIG. 6, the cross section (cross section orthogonal to the vehicle length direction D1) of the first stiffener plate 7 of the present embodiment is a closed cross section in a rectangular shape conforming to the recess 4d of the mid-plate 4. However, between the first stiffener plate 7 and each leg portion 4f of the mid-plate 4, a gap G is secured to prevent the interference of the mid-plate 4 and the first belt 5 with the first stiffener plate 7. Incidentally, FIG. 6 omits hatchings for designating the cross sections of the battery cells 2a.

The first stiffener plate 7 of the present embodiment is an aluminum extruded product, and has hollows 7a extending in the vehicle length direction D1. Here, the exemplified first stiffener plate 7 is provided with two hollows 7a arranged in the vehicle height direction D3. Each hollow 7a is a rectangular shape when viewed from the vehicle length direction D1.

In the present embodiment, each second stiffener plate 8 is also an aluminum extruded product and has a hollow(s) (not illustrated) extending in the vehicle width direction D2. Each hollow of the second stiffener plates 8 is, for example, a rectangular shape similar to that of the hollow 7a of the first stiffener plate 7 when viewed from the vehicle width direction D2. The second stiffener plates 8 may also be provided with multiple hollows arranged in the vehicle height direction D3.

The battery pack 10 of the present embodiment includes a fastening structure 9 that fastens the mid-plate 4 and the first stiffener plate 7 to each other. The fastening structure 9 is configured by, for example, a through-hole 9a formed through the mid-plate 4, a screw hole 9b formed in the first stiffener plate 7 so as to communicate with the through-hole 9a, and a bolt 9c inserted into the through-hole 9a and screwed to the screw hole 9b.

The through-hole 9a extends in the vehicle height direction D3 (height direction Dh) at a position different from those of the hollows 4e in the mid-plate 4. The screw hole 9b extends in the vehicle height direction D3 at a position different from those of the hollows 7a in the first stiffener plate 7. The bolt 9c is inserted to the through-hole 9a from above. In the fastening structure 9, the lower portion of the bolt 9c inserted to the through-hole 9a is screwed to the screw hole 9b, and thereby, the mid-plate 4 and the first stiffener plate 7 are fastened to each other.

### [2. Actions and Effects]

(1) To the cell stack 2 of the battery module 1, the mid-plate 4 is disposed in addition to the pair of end plates 3, so that both end faces of the cell stack 2 in the stacking direction Do can be supported by the end plates 3, and in addition, the intermediate portion of the cell stack 2 in the stacking direction Do can be supported by the mid-plate 4. Thus, the stiffness can be increased at the intermediate portion as well as the both end faces of the cell stack 2 in the stacking direction Do. Therefore, the stiffness of the battery module 1 can be increased.

Especially since the mid-plate 4 can increase the stiffness of the intermediate portion in the stacking direction Do where the bending deformation is likely to occur in the cell stack 2, the deformation of the cell stack 2 can be effectively suppressed. Accordingly, even if the number of battery cells 2a stacked in the cell stack 2 is increased, it is possible to suppress the bending deformation of the cell stack 2 with respect to the stacking direction Do. Further, even if the multiple battery cells 2a are individually deformed by, for example, thermal expansion, the distortion of the cell stack 2 can be suppressed. Thus, the reliability of the battery module 1 can be increased.

Since the recess 4d is provided on at least one of the side faces 4b, 4c of the mid-plate 4, the recess 4d can be used as a space for receiving another member(s) (in the present embodiment, the first belts 5 and the first stiffener plate 7). As in the present embodiment, by disposing the inner belt portions 5b of the first belts 5 in the recess 4d, the multiple battery cells 2a stacked between the end plate 3 and the mid-plate 4 can be held by the first belts 5 from both sides in the stacking direction Do, so that the stiffness of the battery module 1 can be further increased.

In addition, utilization of the recess 4d as the receiving space for another member(s) can obviate the need for providing a different space for arranging another member(s), realizing space saving. Thus, it is possible to increase the output while avoiding the increase in size and/or weight of the battery module 1, and therefore, a decrease in energy density can be suppressed.

(2) If there is provided the first belt 5, which is in an endless belt shape and holds the multiple battery cells 2a stacked between the end plate 3 and the mid-plate 4 from both sides in the stacking direction Do, the multiple battery cells 2a can be restrained by the first belt 5. Especially, since the first belt 5 holds a part of the battery cells 2a (either one of the first group 2B and the second group 2C) rather than the entire battery cells 2a stacked in the cell stack 2, the individual battery cells 2a can be effectively restrained as compared with the second belt 6 that holds the entire cell stack 2.

Further, according to the first belt 5, since the multiple battery cells 2a are held from both sides in the stacking direction Do, it is possible to easily absorb deformation due to thermal expansion of the individual battery cells 2a, and also to suppress vibrations in the stacking direction Do. Furthermore, according to the first intermediate portions 5c connecting the first outer belt portion 5a and the inner belt portion 5b in the first belt 5, it is also possible to suppress vibrations in the direction perpendicular to the stacking direction Do (in the present embodiment, the width direction Dw). Thus, if the first belt 5 is provided, the stiffness of the battery module 1 can be further increased. This further suppresses the deformation of the cell stack 2, so that the reliability of the battery module 1 can be further enhanced.

The disposition of the inner belt portion 5b of the first belt 5 in the recess 4d of the mid-plate 4 can obviate the need for providing a different space for arranging the inner belt portion 5b of the first belt 5, realizing space saving. Therefore, a decrease in the energy density can be further suppressed.

(3) If the pair of first belts 5 is provided on both sides of the mid-plate 4 in the stacking direction Do, respectively, the first group 2B and the second group 2C of the cell stack 2 can be restrained at both sides of the mid-plate 4 in the stacking direction Do by the pair of first belts 5, respectively. In addition to this, if there is provided the second belt 6, which is in an endless belt shape and holds the cell stack 2 from both sides in the stacking direction Do, the entire cell stack 2 can be restrained by the single second belt 6.

As such, by combining the pair of the first belts 5 and one second belt 6, while effectively restraining the individual battery cells 2a by each of the first belts 5, it is possible to suppress the relative positional deviation between the first group 2B and the second group 2C by the second belt 6. Therefore, the stiffness of the battery module 1 can be further increased.

Further, according to the second belt 6, as in the case of the first belt 5, since the multiple battery cells 2a are held from both sides in the stacking direction Do, it is possible to easily absorb the deformation due to the thermal expansion of the individual battery cells 2a, and also to suppress vibrations in the stacking direction Do. In addition, according to the second intermediate portions 6c connecting the second outer belt portions 6a to each other in the second belt 6, it is also possible to suppress vibrations in the direction perpendicular to the stacking direction Do (in the present embodiment, the width direction Dw). Therefore, the stiffness of the battery module 1 can be further increased.

(4) If the mid-plate 4 is an aluminum extruded product and has the hollows 4e extending in the width direction Dw (the cross direction) along which the recess 4d extends, the mid-plate 4 can be easily manufactured by extrusion with the width direction Dw set as the extrusion direction. Thus, manufacturing of the mid-plate 4 can be facilitated, and also, the weight of the mid-plate 4 can be reduced by the hollows 4e.

(5) Since the battery pack 10 including the battery modules 1 is provided with the first stiffener plate 7 fixed to at least one of the bottom plate 31 and the surrounding frame 32 of the housing 30, the stiffness of the housing 30 can be increased. This enables the bottom plate 31 to be thinner and also can avoid the enlargement of the second stiffener plate 8 while ensuring the stiffness required in the housing 30, so that increases in size and weight of the battery pack 10 can be inhibited.

Further, the accommodation of the first stiffener plate 7 in the recess 4d of the mid-plate 4 can obviate the need for providing a different space for arranging the first stiffener plate 7 in the housing 30, realizing space saving. This can also suppress the enlargement of the battery pack 10. Therefore, while increasing the stiffness of the housing 30 by the first stiffener plate 7, it is possible to suppress a decrease in the energy density since the output can be increased concurrently with avoiding increases in size and weight of the battery pack 10 by the accommodation of the first stiffener plate 7 in the recess 4d.

(6) If the fastening structure 9 that fastens the mid-plate 4 and the first stiffener plate 7 to each other is provided, the displacement of the mid-plate 4 relative to the first stiffener plate 7 can be prevented. Therefore, the position of the battery module 1 in the housing 30 can be stabilized, and because the position of the mid-plate 4 is stabilized, the deformation of the battery module 1 itself can be further suppressed. Thus, the reliability of the battery pack 10 can be enhanced.

Further, since the mid-plate 4 is fastened to the first stiffener plate 7, the mid-plate 4 is no longer necessary to be fixed to the bottom plate 31, so that the bottom plate 31 can omit a fastening margin, which realizes a reduction in the thickness of the bottom plate 31.

(7) If the second stiffener plates 8 extend along the stacking direction Do between adjacent battery modules 1, the second stiffener plates 8 can be disposed by utilizing the dead space between the battery modules 1. Accordingly, while further increasing the stiffness of the housing 30 with the second stiffener plates 8, it is possible to suppress a decrease in the energy density since the output can be increased concurrently with avoiding an increase in the size of the battery pack 10.

Further, according to the second stiffener plates 8 fixed between the adjacent battery modules 1, it is possible to suppress the positional deviation between the adjacent battery modules 1. Thus, the reliability of the battery pack 10 can be enhanced.

In addition, according to the first stiffener plate 7 and the second stiffener plates 8 intersecting each other, the stiffness of the housing 30 can be increased in two different directions. This can effectively suppress the deformation of the housing 30 even in a collision of the electric vehicle 20. Therefore, the protectability of the battery pack 10 can be ensured.

(8) According to the electric vehicle 20 including the battery pack 10, since the stiffness of the housing 30 is increased and a decrease in the energy density is suppressed as described above, the protectability of the battery pack 10 can be secured even in a collision, and a satisfactory cruising distance can be realized.

### [3. Modifications]

The recess 4d of the mid-plate 4 may extend in various directions intersecting the stacking direction Do, and may extend, for example, in a direction slightly inclined relative to the width direction Dw. Further, the recess 4d may extend in the height direction Dh when, for example, being provided on the longitudinal face 4c.

The recess 4d may be provided on two or more of the multiple side faces 4b, 4c. When multiple recesses 4d are provided in the mid-plate 4, the individual recesses 4d can be used as receiving spaces for other members, which realizes further space saving. In addition, if the multiple recesses 4d are utilized as the receiving spaces for arranging the inner belt portions 5b of the first belts 5, an increased number of first belts 5 can be arranged, so that the stiffness of the battery module 1 can be further increased.

On the other hand, according to the mid-plate 4 in which only one recess 4d is provided as in the above embodiment, the stiffness can be easily secured, so that the deformation of the cell stack 2 can be further suppressed as compared with the case where multiple recesses 4d are provided.

The shapes of the end plates 3 and the mid-plate 4 described above are merely examples. Each shape of the end plates 3 and the mid-plate 4 may be appropriately set according to the shape of the battery cells 2a. The shape of the recess 4d provided in the mid-plate 4 may be appropriately set according to the shape of another member(s) to be accommodated in the recess 4d. The shape, the number, and the arrangement of the hollows 4e of the mid-plate 4 should not be limited to the above examples. The mid-plate 4 may be a product other than an aluminum extruded product, and the hollows 4e may be omitted.

The first belt 5 should only be disposed so as to be capable of holding the multiple battery cells 2a from both sides in the stacking direction Do, and may be in a posture that, for example, the first outer belt portion 5a and the inner belt portion 5b each extend in the height direction Dh, and the first intermediate portions 5c extend in the stacking direction Do to be disposed outside of the multiple battery cells 2a in the height direction Dh. Similarly, the arrangement of the second belt 6 should not be limited to the above example. The first belts 5 and the second belt 6 may be omitted from the battery module 1.

The number of battery modules 1 provided in the battery pack 10 may be one or more. The posture of the battery modules 1 in the battery pack 10 is not particularly limited. For example, the battery modules 1 may be received in the housing 30 in postures in which the stacking directions Do thereof coincide with the vehicle length direction D1, or may be received in the housing 30 in postures in which the recesses 4d thereof face to the sides (the surrounding frame 32 side) or up (to the lid plate side).

The extending directions, the numbers, and the arrangements of the first stiffener plate 7 and the second stiffener plates 8 should not be limited to the above examples. The first stiffener plate 7 and the second stiffener plates 8 may each be a product other than an aluminum extruded product, and the hollows thereof may be omitted. The first stiffener plate 7 or the second stiffener plates 8 or both may be omitted from the battery pack 10.

The fastening structure 9 described above is an example. As the fastening structure 9, various structures that fasten the mid-plate 4 and the first stiffener plate 7 to each other can be applied. Incidentally, the fastening structure 9 can also be omitted from the battery pack 10.

The target to which the battery module 1 is applied should not be limited to the above-described battery pack 10. Also, the target to which the battery pack 10 is applied should not be limited to the above-described electric vehicle 20. The battery module 1 may be applied to, for example, a battery pack for something other than a vehicle, and the battery pack 10 may be applied to, for example, an electric vehicle other than a truck.

### [Reference Signs List]

- 1: battery module
- 2: cell stack
- 2a: battery cell
- 2B: first group
- 2C: second group
- 3: end plate
- 4: mid-plate
- 4a: main face
- 4b: lateral face (side face)
- 4c: longitudinal face (side face)
- 4d: recess
- 4e: hollow
- 4f: leg part
- 5: first belt
- 5a: first outer belt portion
- 5b: inner belt portion
- 5c: first intermediate portion
- 6: second belt
- 6a: second outer belt portion
- 6c: second intermediate portion
- 7: first stiffener plate
- 7a: hollow
- 8: second stiffener plate
- 9: fastening structure
- 9a: through-hole
- 9b: screw hole
- 9c: bolt
- 10: battery pack
- 11: heating foil
- 20: electric vehicle
- 21: cab
- 22: cargo box
- 23: side rail
- 30: housing
- 31: bottom plate
- 32: surrounding frame
- D1: vehicle length direction
- D2: vehicle width direction
- D3: vehicle height direction
- Dh: height direction
- Do: stacking direction
- Dw: width direction (cross direction)
- G: gap

## Claims

1. A battery module comprising:
a cell stack (2) in which a plurality of battery cells (2a) is stacked along a predetermined stacking direction (Do);
a pair of end plates (3) disposed on both end faces of the cell stack (2) in the stacking direction (Do);
a mid-plate (4) disposed in an intermediate portion of the cell stack (2) in the stacking direction (Do), the mid-plate (4) having a pair of main faces (4a) each facing the battery cell (2a), a plurality of side faces (4b, 4c) each connecting outer edges of the pair of main faces, and a recess (4d) on at least one of the side faces (4b, 4c), the recess (4d) extending in a cross direction (Dw) that intersects the stacking direction (Do); and
a first belt (5) being formed in an endless belt shape and having an outer belt portion (5a) disposed outside of the end plate (3) in the stacking direction (Do) and an inner belt portion (5b) disposed in the recess, the first belt (5) holding the battery cells (2a) stacked between the end plate (3) and the mid-plate (4) from both sides in the stacking direction (Do),
**characterized in that**
the mid-plate (4) having a pair of legs (4f) which are formed between each main face (4a ) and the recess (4d).

2. The battery module according to claim 1 comprising:
a pair of the first belts (5) provided on both sides of the mid-plate (4) in the stacking direction (Do); and
a second belt (6) being formed in an endless belt shape and having a pair of second outer belt portions (6a) respectively disposed on outside of the pair of end plates (3) in the stacking direction (Do), the second belt (6) holding the cell stack (2) from both sides in the stacking direction (Do).

3. The battery module according to claim 1 or 2, wherein
the mid-plate (4) is an aluminum extruded product and has a hollow (4e) extending in the cross direction (Dw).

4. A vehicular battery pack comprising:
the battery module (1) according to any one of claims 1 to 3;
a housing (30) accommodating the battery module (1) and having a bottom plate (31) on which the battery module (1) is mounted and a surrounding frame (32) standing from outer edges of the bottom plate (31) to surround the battery module (1); and
a first stiffener plate (7) fixed to at least one of the bottom plate (31) and the surrounding frame (32) and accommodated in the recess of the mid-plate (4).

5. The vehicular battery pack according to claim 4 comprising
a fastening structure (9) that fastens the mid-plate (4) and the first stiffener plate (7) to each other.

6. The vehicular battery pack according to claim 4 or 5 comprising:
a plurality of the battery modules (1) arranged in parallel in postures in which the stacking directions (Do) extend parallel to each other; and
a second stiffener plate (8) disposed on the bottom plate (31) and extending along the stacking direction (Do) between the battery modules (1) adjacent to each other, wherein
the first stiffener plate (7) extends along the cross direction (Dw) and is disposed on the bottom plate (31) to intersect the second stiffener plate (8).

7. An electric vehicle comprising
the vehicular battery pack (10) according to any one of claims 4 to 6.

## Patentansprüche

1. Batteriemodul, das umfasst:
einen Zellenstapel (2), in dem eine Vielzahl von Batteriezellen (2a) entlang einer vorbestimmten Stapelrichtung (Do) gestapelt sind;
ein Paar von Endplatten (3), die an beiden Endflächen des Zellenstapels (2) in der Stapelrichtung (Do) angeordnet sind;
eine Mittelplatte (4), die in einem Zwischenabschnitt des Zellenstapels (2) in der Stapelrichtung (Do) angeordnet ist, wobei die Mittelplatte (4) ein Paar von Hauptflächen (4a), die jeweils der Batteriezelle (2a) zugewandt sind, eine Vielzahl von Seitenflächen (4b, 4c), die jeweils Außenkanten des Paars von Hauptflächen verbinden, und eine Aussparung (4d) an mindestens einer der Seitenflächen (4b, 4c) aufweist, wobei sich die Aussparung (4d) in einer Querrichtung (Dw) erstreckt, die die Stapelrichtung (Do) schneidet; und
ein erstes Band (5), das in einer Endlosbandform ausgebildet ist und einen äußeren Bandabschnitt (5a), der außerhalb der Endplatte (3) in der Stapelrichtung (Do) angeordnet ist, und einen inneren Bandabschnitt (5b), der in der Aussparung angeordnet ist, aufweist, wobei das erste Band (5) die Batteriezellen (2a), die zwischen der Endplatte (3) und der Mittelplatte (4) gestapelt sind, von beiden Seiten in der Stapelrichtung (Do) hält,
**dadurch gekennzeichnet, dass**
die Mittelplatte (4) ein Paar von Schenkeln (4f) aufweist, die zwischen jeder Hauptfläche (4a) und der Aussparung (4d) ausgebildet sind.

2. Batteriemodul nach Anspruch 1, das umfasst:
ein Paar der ersten Bänder (5), die auf beiden Seiten der Mittelplatte (4) in der Stapelrichtung (Do) vorgesehen sind; und
ein zweites Band (6), das in einer Endlosbandform ausgebildet ist und ein Paar von zweiten äußeren Bandabschnitten (6a) aufweist, die jeweils an der Außenseite des Paars von Endplatten (3) in der Stapelrichtung (Do) angeordnet sind, wobei das zweite Band (6) den Zellenstapel (2) von beiden Seiten in der Stapelrichtung (Do) hält.

3. Batteriemodul nach Anspruch 1 oder 2, wobei
die Mittelplatte (4) ein aus Aluminium extrudiertes Produkt ist und einen Hohlraum (4e) aufweist, der sich in der Querrichtung (Dw) erstreckt.

4. Fahrzeugbatteriepack, das umfasst:
ein Batteriemodul (1) nach einem der Ansprüche 1 bis 3;
ein Gehäuse (30), das das Batteriemodul (1) aufnimmt und eine Bodenplatte (31), an der das Batteriemodul (1) montiert ist, und einen Umgebungsrahmen (32), der von Außenkanten der Bodenplatte (31) absteht, so dass er das Batteriemodul (1) umgibt, aufweist; und
eine erste Versteifungsplatte (7), die an mindestens einer der Bodenplatte (31) und des Umgebungsrahmens (32) fixiert ist und in der Aussparung der Mittelplatte (4) aufgenommen ist.

5. Fahrzeugbatteriepack nach Anspruch 4, das umfasst
eine Befestigungsstruktur (9), die die Mittelplatte (4) und die erste Versteifungsplatte (7) aneinander befestigt.

6. Fahrzeugbatteriepack nach Anspruch 4 oder 5, das umfasst:
eine Vielzahl der Batteriemodule (1), die parallel in Lagen angeordnet sind, in denen sich die Stapelrichtungen (Do) parallel zueinander erstrecken; und
eine zweite Versteifungsplatte (8), die an der Bodenplatte (31) angeordnet ist und sich entlang der Stapelrichtung (Do) zwischen den zueinander benachbarten Batteriemodulen (1) erstreckt, wobei
die erste Versteifungsplatte (7) sich entlang der Querrichtung (Dw) erstreckt und an der Bodenplatte (31) so angeordnet ist, dass sie die zweite Versteifungsplatte (8) schneidet.

7. Elektrofahrzeug, das umfasst
das Fahrzeugbatteriepack (10) nach einem der Ansprüche 4 bis 6.

## Revendications

1. Module de batterie comportant :
un empilement d'éléments (2) dans lequel une pluralité d'éléments de batterie (2a) est empilée le long d'une direction d'empilement prédéterminée (Do) ;
une paire de plaques d'extrémité (3) disposées sur les deux faces d'extrémité de l'empilement d'éléments (2) dans la direction d'empilement (Do) ;
une plaque centrale (4) disposée dans une partie intermédiaire de l'empilement d'éléments (2) dans la direction d'empilement (Do), la plaque centrale (4) ayant une paire de faces principales (4a) dirigées chacune vers l'élément de batterie (2a), une pluralité de faces latérales (4b, 4c) reliant chacune des bords extérieurs de la paire de faces principales, et un évidement (4d) sur au moins une des faces latérales (4b, 4c), l'évidement (4d) s'étendant dans une direction transversale (Dw) qui coupe la direction d'empilement (Do) ; et
une première ceinture (5) étant formée en forme de bande sans fin et ayant une partie de ceinture extérieure (5a) disposée à l'extérieur de la plaque d'extrémité (3) dans la direction d'empilement (Do) et une partie de ceinture intérieure (5b) disposée dans l'évidement, la première ceinture (5) maintenant les éléments de batterie (2a) empilés entre la plaque d'extrémité (3) et la plaque centrale (4) des deux côtés dans la direction d'empilement (Do), **caractérisé en ce que**
la plaque centrale (4) a une paire d'ailes (4f) qui sont formées entre chaque face principale (4a) et l'évidement (4d).

2. Module de batterie selon la revendication 1, comportant :
une paire des premières ceintures (5) fournies des deux côtés de la plaque centrale (4) dans la direction d'empilement (Do) ; et
une seconde ceinture (6) étant formée en forme de bande sans fin et ayant une paire de secondes parties de ceinture extérieures (6a) disposées respectivement sur un extérieur de la paire de plaques d'extrémité (3) dans la direction d'empilement (Do), la seconde ceinture (6) maintenant l'empilement d'éléments (2) des deux côtés dans la direction d'empilement (Do).

3. Module de batterie selon la revendication 1 ou 2, dans lequel
la plaque centrale (4) est un produit extrudé en aluminium et a un creux (4e) s'étendant dans la direction transversale (Dw).

4. Bloc-batterie pour véhicule comportant :
le module de batterie (1) selon l'une quelconque des revendications 1 à 3 ;
un boîtier (30) recevant le module de batterie (1) et ayant une plaque de fond (31) sur laquelle le module de batterie (1) est monté et un châssis d'encadrement (32) s'étendant à partir de bords extérieurs de la plaque de fond (31) pour entourer le module de batterie (1) ; et
une première plaque de raidissement (7) fixée à au moins un élément parmi la plaque de fond (31) et le châssis d'encadrement (32) et reçue dans l'évidement de la plaque centrale (4).

5. Bloc-batterie pour véhicule selon la revendication 4, comportant :
une structure de fixation (9) qui fixe la plaque centrale (4) et la première plaque de raidissement (7) l'une à l'autre.

6. Bloc-batterie pour véhicule selon la revendication 4 ou 5, comportant :
une pluralité des modules de batterie (1) agencés en parallèle dans des positions dans lesquelles les directions d'empilement (Do) s'étendent parallèlement les unes aux autres ; et
une seconde plaque de raidissement (8) disposée sur la plaque de fond (31) et s'étendant le long de la direction d'empilement (Do) entre les modules de batterie (1) adjacents les uns aux autres, dans lequel
la première plaque de raidissement (7) s'étend le long de la direction transversale (Dw) et est disposée sur la plaque de fond (31) de manière à croiser la seconde plaque de raidissement (8).

7. Véhicule électrique comportant :
le bloc-batterie pour véhicule (10) selon l'une quelconque des revendications 4 à 6.
